# EUROPÄISCHE PATENTSCHRIFT

(11) **EP 3 765 275 B1**
(45) Veröffentlichungstag und Bekanntmachung des Hinweises auf die Patenterteilung: **03.01.2024**
(21) Anmeldenummer: 19711300.4
(22) Anmeldetag: 12.03.2019
(51) Int. Cl.: B29C 65/60, B29C 65/10, B29C 65/18, B29C 65/26, B29C 65/72

(54) **VERFAHREN UND VORRICHTUNG ZUM VERNIETEN VON BAUTEILEN**
METHOD AND DEVICE FOR RIVETING COMPONENTS
PROCÉDÉ ET DISPOSITIF POUR RIVETER DES PIÈCES

(30) Priorität: 15.03.2018 DE 102018002085
(43) Veröffentlichungstag der Anmeldung: 20.01.2021
(73) Patentinhaber: bdtronic GmbH, 97990 Weikersheim (DE)
(72) Erfinder: HERRMANN, Christian, 97980 Bad Mergentheim-Stuppach (DE); GACHSTETTER, Alexander, 97258 Oberickelsheim (DE); LEIMIG, Ina, 97255 Gelchsheim (DE); KRAFT, Thomas, 66916 Breitenbach (DE)
(74) Vertreter: Ellberg, Nils
(86) Internationale Anmeldenummer: PCT/EP2019/056182
(87) Internationale Veröffentlichungsnummer: WO 2019/175190

(56) Entgegenhaltungen:
- EP-A1- 3 002 105
- DE-A1-102016 006 097
- GB-A- 2 173 139
- US-A- 5 187 863

## Beschreibung

Die Erfindung betrifft eine Vorrichtung zum Vernieten von Bauteilen gemäß dem Oberbegriff des Anspruchs 1. Des Weiteren betrifft die Erfindung ein Verfahren zum Vernieten gemäß dem Oberbegriff des Anspruchs 7.

Ein aus DE 10 2016 006 097 A1, US 5 187 863, GB 2 173 139 A und EP 3 002 105 A1 bekanntes Verfahren zum Verbinden von zwei Teilen bzw. Bauteilen ist das Vernieten. Dabei wird beispielsweise ein erstes Teil mit einem zweiten Teil, bzw. einem sogenannten Fügepartner, in Kontakt gebracht und durch ein Verbindungsmittel, insbesondere durch einen Pin oder einen Niet, miteinander verbunden bzw. vernietet.

Bei einem derartigen Nietverfahren ist es von äußerster Bedeutung, dass das Verbindungselement stets mit der gleichen Krafteinbringung beaufschlagt wird, um eine ausreichend starke Verbindung zwischen den beiden Teilen zu gewährleisten. Insbesondere bei einer Vielzahl von durchzuführenden Nietvorgängen von zwei Teilen, muss die Krafteinbringung reproduzierbar sein. Wenn die einzelnen Verbindungselemente von zwei Teilen, die zu verbinden sind, unterschiedliche Krafteinbringungen erfahren, kann dies zu einer mangelhaften Verbindung der Teile mit einer ungenügenden Stabilität führen.

Davon ausgehend liegt der Erfindung die Aufgabe zugrunde, eine Vorrichtung und ein Verfahren der eingangs genannten Art zu schaffen, bei denen die genannten Nachteile beseitigt sind.

Eine Vorrichtung zur Lösung dieser Aufgabe weist die Merkmale des Anspruchs 1 auf. Demnach ist eine Vorrichtung mit einem Formstempel und mit einem Schaft, in dem der Formstempel beweglich gelagert ist, vorgesehen. Dabei ist ein Innendurchmesser des Schaftes derart bemessen, dass er einem Durchmesser des durch den Formstempel verformten Verbindungselementes entspricht. Zum Vernieten des Verbindungselementes mit dem Fügepartner wird das Verbindungselement von dem Formstempel derart verformt, dass es an die Innenwandung des Schaftes gedrückt wird. Die Innenwandung des Schaftes stellt für das sich verformende Verbindungselement somit eine Gegenform dar. Durch diese Gegenform oder den Widerstand, den die Innenwandung des Schaftes auf das sich verformende Verbindungselement ausübt, kann ein Materialaustritt des Verbindungselementes aus der Vorrichtung zum Vernieten vermieden werden. Durch diese definierten Randbedingungen ist eine reproduzierbare Krafteinbringung durch den Formstempel auf das Verbindungselement möglich. Das Verbindungselement wird derart durch den Formstempel verformt, dass das verformte Verbindungselement stets die gleiche Form aufweist. Durch diese gleiche Verbindungselement- bzw. Nietkopfgeometrie wird für alle Verbindungen die gleiche Festigkeit erreicht. Ferner ist vorgesehen, dass der Formstempel mit einer Pneumatikeinheit verbunden ist, durch die der Formstempel mit einem steuerbaren und variierbaren, insbesondere kontinuierlichen, Druck beaufschlagbar ist, wobei der Druck vorzugsweise in Abhängigkeit von einer Temperatur des Verbindungselementes variierbar ist und wobei über die Pneumatikeinheit vorzugsweise eine Dauer der Druckbeaufschlagung des Verbindungselementes einstell- bzw. variierbar ist. Durch die temperaturabhängige Beaufschlagung des Formstempels mit einem vorbestimmbaren oder einstellbaren Druck braucht der Formstempel gerade nur mit dem Druck beaufschlagt werden, der notwendig ist, um das erhitzte Verbindungselement in die gewünschte Form zu bringen. Durch Variation der Dauer bzw. der Zeit, für die das Verbindungselement mit Druck beaufschlagt wird, kann ebenfalls die Verformung des Verbindungselementes gesteuert werden.

Bevorzugt kann es außerdem vorgesehen sein, dass der Innendurchmesser des Schaftes mit einem Außendurchmesser des Formstempels korrespondiert, vorzugweise dass der Formstempel formschlüssig in dem Schaft bewegbar ist oder der Formstempel und eine Innenwandung des Schaftes wenigstens geringfügig voneinander beabstandet sind. Dadurch kann vermieden werden, dass Material beim Verformen des Verbindungselementes durch einen Spalt zwischen der Innenwandung des Schaftes und dem Formstempel tritt. Dies führt zu einer reproduzierbaren Krafteinbringung durch den Formstempel.

Darüber hinaus kann es erfindungsgemäß vorgesehen sein, dass die Vorrichtung ein Schnellwechselsystem aufweist, durch welches der Schaft und/oder der Formstempel und sämtliche mechanische, elektrische und/oder pneumatische Verbindungen miteinander koppel- und entkoppelbar sind. Durch dieses Schnellwechselsystem kann zum einen die Wartung der Vorrichtung schneller und einfacher gestaltet werden und zum anderen können für das Verbinden verschiedener Teile bzw. das Vernieten von verschiedenen Verbindungselementen auf eine schnelle und einfache Art und Weise entsprechende Schafte und Formstempel ausgetauscht werden. Für die Kopplung der einzelnen Verbindungen können die gängigen Schnellverschlüsse, wie beispielsweise Bajonettverschlüsse, eingesetzt werden.

Ein weiteres bevorzugtes Ausführungsbeispiel kann es vorsehen, dass dem Formstempel ein Temperaturregelsystem zugeordnet ist zur Erwärmung oder Kühlung des Formstempels, insbesondere, dass ein Träger des Formstempels Kanäle zur Führung eines Kühl- oder Heizmediums, vorzugweise Luft, aufweist, und der Formstempel und/oder der Schaft über mindestens einen Temperatursensor verfügt, der dem Temperaturregelsystem zugeordnet ist. Durch das Temperaturregelsystem lässt sich insbesondere das erhitzte Verbindungselement schneller abkühlen. Gleichermaßen ist es denkbar, dass der Formstempel zusätzlich erhitzt wird, um ein Trennen des Formstempels von dem Verbindungselement zu erleichtern.

Dazu kann es des Weiteren vorgesehen sein, dass der Formstempel eine Antihaftbeschichtung aufweist. Durch diese Antihaftbeschichtung wird zum einen der Formstempel geschützt, was zu einer Verlängerung der Standzeit führt. Des Weiteren kann durch eine derartige Beschichtung das Ablöseverhalten des Formstempels von dem Verbindungselement verbessert werden. Schließlich kann durch eine entsprechende Antihaftbeschichtung auch die Oberflächenbeschaffenheit des Verbindungselementes verbessert werden, was insbesondere zu ästhetischen Vorteilen führt.

Darüber hinaus kann es ein weiteres vorteilhaftes Ausführungsbeispiel der Erfindung vorsehen, dass sowohl der Formstempel als auch der Schaft über eine Positionsbestimmungseinrichtung verfügen, mit welcher der Hub des Formstempels und des Schaftes über einer Oberfläche des zweiten Teils und über dem Verbindungselement sowie die relative Ausrichtung des Formstempels zum Schaft bestimmbar ist. Durch eine derartige Positionsbestimmungseinrichtung lässt sich die Vorrichtung automatisiert direkt über das zu verformende Verbindungselement bewegen bzw. lässt sich das Verbindungselement direkt unter den Schaft der Vorrichtung verfahren. Durch eine Ermittlung der relativen Position des Formstempels in dem Schaft erkennt eine Steuereinrichtung den durchzuführenden Hubweg für den Formstempel, um aus dem Schaft herausgefahren zu werden bzw. wird der zu fahrende Weg erkannt, der notwendig ist, um das Verbindungselement zu verformen.

Ein weiteres Ausführungsbeispiel kann es vorsehen, dass der Vorrichtung ein Sensor zur Ermittlung einer Kennung des verwendeten Formstempels zugeordnet ist, wobei es sich bei der Kennung um einen RFID-Chip, eine Beschriftung oder ein Barcode, der dem Formstempel zugeordnet ist, handeln kann. Über eine Steuereinheit kann die Kennung des Formstempels dokumentiert werden. Darüber hinaus kann es vorgesehen sein, dass für die Kennung eines jeden Formstempels eine Kalibrierung hinterlegt ist, mit der die Vorrichtung bzw. der Formstempel vor dem Vernieten kalibrierbar ist.

Ein Verfahren zur Lösung der eingangs genannten Aufgabe wird durch die Maßnahmen des Anspruchs 7 beschrieben. Demnach ist es vorgesehen, dass ein Verbindungselement zunächst in einer Vorrichtung zum Erhitzen erhitzt wird, anschließend zu einer Vorrichtung zum Vernieten transportiert und dort durch einen Formstempel verformt wird. Alternativ ist es auch denkbar, dass die Vorrichtung zum Vernieten dem erhitzten Verbindungselement zugeführt wird. Die Vorrichtung zum Vernieten und die Vorrichtung zum Erhitzen sind bei beiden Alternativen räumlich voneinander getrennt.

Zum Vernieten des Verbindungselementes wird ein rohrartiger, den Formstempel führender Schaft über das Verbindungselement geführt und mit einer Stirnseite auf einer Oberfläche des zweiten Teils abgesetzt. Es ist auch denkbar, dass das Verbindungselement in den den Formstempel führenden Schaft geführt wird. Weiter ist es vorgesehen, dass der Formstempel in dem Schaft zum Vernieten der Teile auf das Verbindungselement zubewegt wird, wobei das Verbindungselement durch den Formstempel so lange verformt wird, bis ein äußerer Durchmesser des verformten Verbindungselementes einem Innendurchmesser des Schaftes entspricht. Somit wird dadurch, dass die Stirnseite des Schaftes auf der Oberfläche des zweiten Teils abgesetzt wird, eine Begrenzung für das sich verformende Verbindungselement geschaffen. Dadurch wird erreicht, dass die Geometrie der verformten Verbindungselemente stets gleich ist. Außerdem kann dadurch gewährleistet werden, dass die Krafteinbringung auf alle Verbindungselemente identisch bzw. reproduzierbar ist, da das sich verformende Verbindungselement nicht weiter verformt werden kann.

Darüber hinaus kann es ein weiteres Ausführungsbeispiel der Erfindung vorsehen, dass der Formstempel mit einem Druck beaufschlagt wird, der insbesondere in Abhängigkeit von einer ermittelten Temperatur des Verbindungselementes variiert wird. So kann beispielsweise der für die Verformung des Verbindungselementes notwendige Druck bei einer erhöhten Temperatur des Verbindungselementes geringer sein, als bei einer geringeren Temperatur.

Gleichermaßen kann es erfindungsgemäß vorgesehen sein, dass die Temperatur des Formstempels durch mindestens einen Temperatursensor gemessen wird und durch ein Temperaturregelsystem der Formstempel gekühlt oder erhitzt wird.

Außerdem kann es erfindungsgemäß vorgesehen sein, dass eine Position des Formstempels und des Schaftes relativ zum Verbindungselement und eine Position des Formstempels relativ zum Schaft durch eine Positionsbestimmungseinrichtung ermittelt werden und der Formstempel und der Schaft in Abhängigkeit von diesen ermittelten Positionen verfahren werden. Insbesondere werden der Formstempel und der Schaft zu einem nächsten Verbindungselement verfahren.

Ein bevorzugtes Ausführungsbeispiel der vorliegenden Erfindung wird nachfolgend anhand der Zeichnung näher erläutert. In dieser zeigt:
- Fig. 1a: Heranführen einer Düse an ein Verbindungselement,
- Fig. 1b: Absenken der Düse über dem Verbindungselement zur Beaufschlagung mit Heißluft,
- Fig. 1c: Wegbewegen der Düse von dem erhitzten Verbindungselement,
- Fig. 2a: Heranführen einer Vorrichtung zum Vernieten an das Verbindungselement,
- Fig. 2b: Absetzen eines Schaftes auf einer Oberfläche,
- Fig. 2c: Verformung des Verbindungselementes durch einen Formstempel,
- Fig. 2d: Ausformung des Verbindungselementes durch den Formstempel,
- Fig. 2e: Wegbewegen der Vorrichtung zum Nieten von den vernieteten Teilen,
- Fig. 3a: ein weiteres Ausführungsbeispiel für das Heranführen einer Düse mit einer Hülse an ein Verbindungselement,
- Fig. 3b: Beaufschlagung des Verbindungselementes mit Heißluft durch die Düse,
- Fig. 3c: Wegbewegen der Düse und der Hülse nach Erhitzen des Verbindungselementes,
- Fig. 4a: eine Darstellung eines weiteren Ausführungsbeispiels für ein Heranführen einer Düse mit einer Hülse an ein Verbindungselement,
- Fig. 4b: Beaufschlagung des Verbindungselementes mit Heißluft durch die Düse, und
- Fig. 4c: Wegbewegen der Hülse und der Düse von dem Verbindungselement.

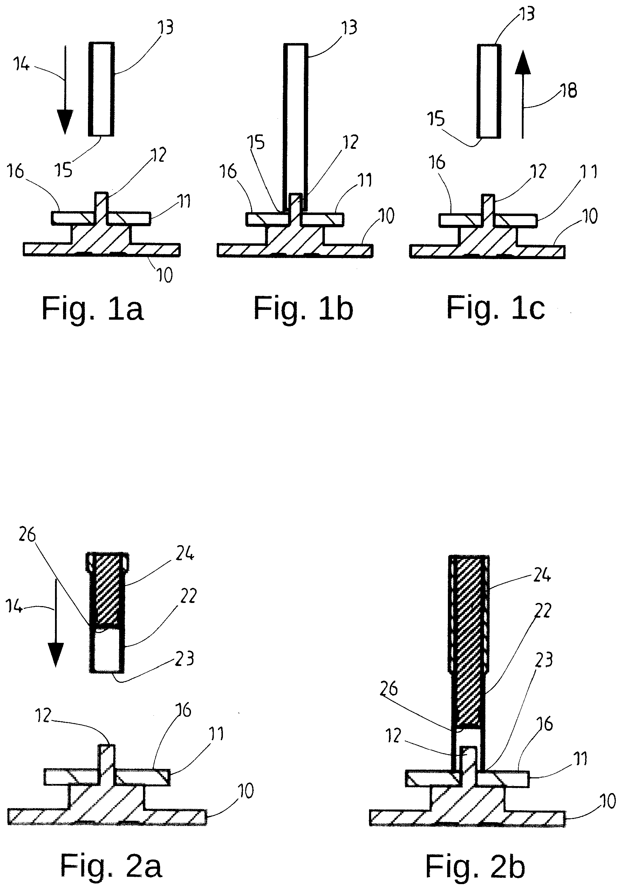

Um ein erstes Teil 10 mit einem zweiten Teil 11, auch als Fügepartner bezeichnet, zu vernieten, wird ein Verbindungselement 12, auch als Pin oder Niet bezeichnet, zunächst durch Beaufschlagung eines heißen Mediums bzw. Heißluft erhitzt (Fig. 1a, 1b). Bei dem in den Figuren dargestellten Ausführungsbeispiel ist das Verbindungselement 12 dem ersten Teil 10 zugeordnet und durch eine Öffnung in dem zweiten Teil 11 geführt.

Das Prinzip des Erhitzens des Verbindungselementes 12 wird durch die Fig. 1a bis 1c dargestellt. Dabei wird zunächst eine Düse 13, die im Wesentlichen rohrartig ausgebildet ist, in Pfeilrichtung 14 über das Verbindungselement 12 geführt (Fig. 1a, 1b). Der Übersicht halber ist hier nur ein Teil der stark schematisierten Düse 13 dargestellt. Gleichermaßen kann das Verbindungselement 12 auch in die Düse 13 geführt werden. Die durch die Düse 13 zu führende Heißluft wird durch einen nicht dargestellten Heißluftgenerator erzeugt. Dabei wird dem Heißluftgenerator zunächst Luft zugeführt und diese sodann auf eine vorzugebende Temperatur erhitzt. Durch ein entsprechendes nicht dargestelltes Gebläse wird die Heißluft beschleunigt durch die Düse 13 direkt auf das Verbindungselement 12 geführt. Damit die Heißluft an einer Stirnseite 15 der Düse 13 beim Erhitzen des Verbindungselementes 12 entweichen kann und es nicht zu einem Aufstauen der heißen Luft kommt, wird die Düse 13 gerade nur so weit über das Verbindungselement 12 geführt, dass sich zwischen der Stirnseite 15 und einer Oberfläche 16 des zweiten Teils 11 ein Spalt 17 ausbildet. Die durch die Düse 13 strömende Heißluft erhitzt somit das Verbindungselement 12 und verlässt sodann die Düse 13 durch den ringartigen Spalt (Fig. 1b).

Nach einer vorgegebenen Zeit, in der das Verbindungselement 12 ausreichend mit der Heißluft beaufschlagt wurde, wird die Düse 13 wieder in Pfeilrichtung 18 von dem Verbindungselement 12 weggeführt (Fig. 1c). Im Weiteren wird die Düse 13 derart verfahren, dass sie ein weiteres Verbindungselement 12 mit Heißluft beaufschlagen kann bzw. wird ein weiteres erstes Teil 10 zusammen mit dem entsprechenden zweiten Teil 11 relativ zu der Düse 13 ausgerichtet, damit diese wiederum über das Verbindungselement 12 führbar ist.

Sobald das Verbindungselement 12 erhitzt wurde, werden die Bauteile 10, 11 von der Station oder der Vorrichtung zum Erhitzen des Verbindungselements 12 für das Nieten zu einer weiteren Station oder Vorrichtung transportiert. Diese erfindungsgemäße Vorrichtung zum Nieten wird schematisch durch die Figuren 2a bis 2e beschrieben. Die Vorrichtung zum Nieten ist vorzugsweise im Zusammenhang mit den in den Figuren 1a bis 1c, 3a bis 3c und 4a bis 4c dargestellten Vorrichtungen zum Erhitzen eines Verbindungselements 12 zu betrachten. Allerdings kann die hier beschriebene Vorrichtung zum Nieten auch mit anderen Heizvorrichtungen kombiniert werden.

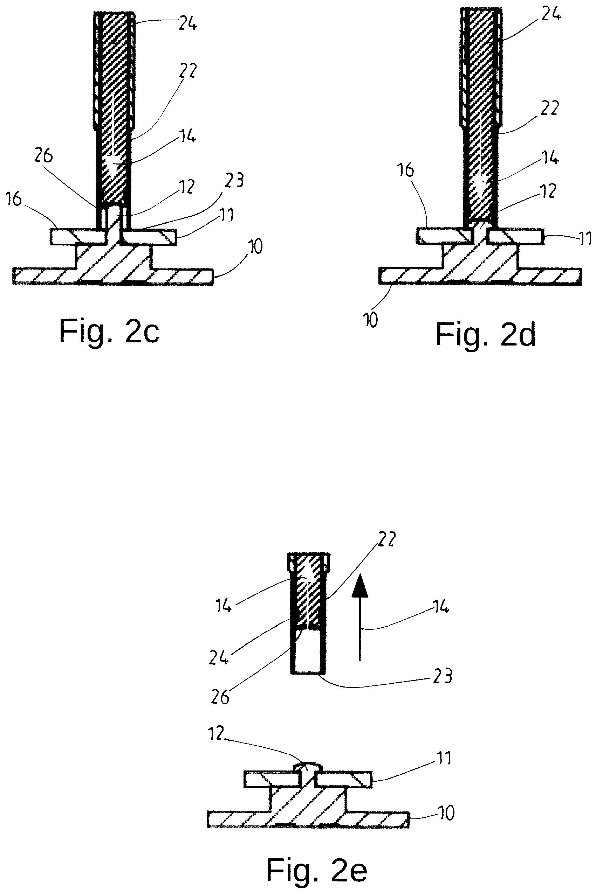

Zum erfindungsgemäßen Vernieten des ersten Teils 10 mit dem zweiten Teil 11 wird ein rohrartiger Schaft 22 über das Verbindungselement 12 geführt (Fig. 2a). Dabei wird eine Stirnseite 23 des Schaftes 22 auf die Oberfläche 16 des zweiten Teils 11 abgesetzt, sodass sich eine geschlossene Kammer im Inneren des Schaftes 22 ausbildet (Fig. 2b). Für eine formschlüssige Verbindung ist es denkbar, dass der Schaft federvorgespannt ist, um sich eventuellen Unregelmäßigkeiten auf der Oberfläche 16 anzupassen oder um Vibrationen entgegenzuwirken. Innerhalb des Schaftes 22 ist ein Formstempel 24 beweglich gelagert. Sobald sich der Schaft 22 in Richtung 14 über das Verbindungselement 12 gesenkt hat, oder auch währenddessen, wird der Formstempel 24 innerhalb des Schaftes 22 ebenfalls in Richtung 14 auf das Verbindungselement 12 zubewegt (Fig. 2c). Bevorzugterweise entspricht ein Außendurchmesser des Formstempels 24 einem Innendurchmesser des Schaftes 22, sodass sich zwischen dem Schaft 22 und dem Formstempel 24 kein Spalt ausbilden kann.

Eine Stirnfläche 26 des Formstempels 24 ist bei dem hier dargestellten Ausführungsbeispiel konkav ausgebildet. Durch die Form bzw. Wölbung der Stirnfläche 26 wird später die Form des verformten Verbindungselementes 12 definiert. Daher kann es auch vorgesehen sein, dass die in den Figuren dargestellte Stirnfläche 26 eine andere Form aufweist; beispielsweise eine konvexe Form oder eine plane Form.

Zum Vernieten des ersten Teils 10 mit dem zweiten Teil 11 wird das Verbindungselement 12 durch den Formstempel 24 in Pfeilrichtung 14 zusammengedrückt bzw. verformt (Fig. 2d). Dabei fügt sich das immer noch heiße Verbindungselement 12 an die Form der Stirnfläche 26 des Formstempels 24 und an die Innenwandung des Schaftes 22 an. Durch diese Einschränkung in der Bewegung des Verbindungselementes 12 wird die Form des Verbindungselementes 12 auf eine definierte Art und Weise festgelegt.

Sobald die Stirnfläche 26 des Formstempels 24 in Kontakt mit dem Verbindungselement 12 gelangt, kann die Kraft, mit der der Formstempel 24 beaufschlagt wird, variiert werden, um das Verbindungselement 12 mit einem definierten Druck zu verformen. Gleichermaßen kann die Geschwindigkeit mit der der Formstempel 24 innerhalb des Schaftes 22 bewegt wird, variiert bzw. reduziert werden.

Durch eine Wegmesseinrichtung für den Formstempel 24 und/oder einen Sensor zur Ermittlung des durch das Verbindungselement 12 ausgeübten Gegendrucks kann das Vernieten gesteuert werden. Durch diese Steuerung ist es möglich, dass der Formstempel 24 unter den definierten Bedingungen stets mit der gleichen Kraft und der gleichen Geschwindigkeit auf das Verbindungselement 12 geführt wird. Durch dieses Vorgehen kann eine optimale Reproduzierbarkeit der Krafteinbringung bzw. des Nietvorgangs erzielt werden. Der Druck, der durch den Formstempel 24 auf das Verbindungselement 12 ausgeübt wird, kann über dem Formstempel 24 zugeordnete Federn bzw. eine Federvorspannung erfolgen. Durch Einstellung dieser Federvorspannung kann der Krafteintrag durch den Formstempel 24 eingestellt werden.

Sobald der Nietvorgang abgeschlossen ist, d. h., das Verbindungselement 12 seine vorgesehene Form erreicht hat bzw. mit einer vordefinierten Kraft beaufschlagt wurde, wird der Schaft 22 mitsamt der Formstempel 24 wieder von der Oberfläche 16 in Pfeilrichtung 18 entfernt. Bei diesem Zurückbewegen kann sich der Formstempel 24 auch innerhalb des Schaftes 22 bereits zurückbewegen (Fig. 2e).

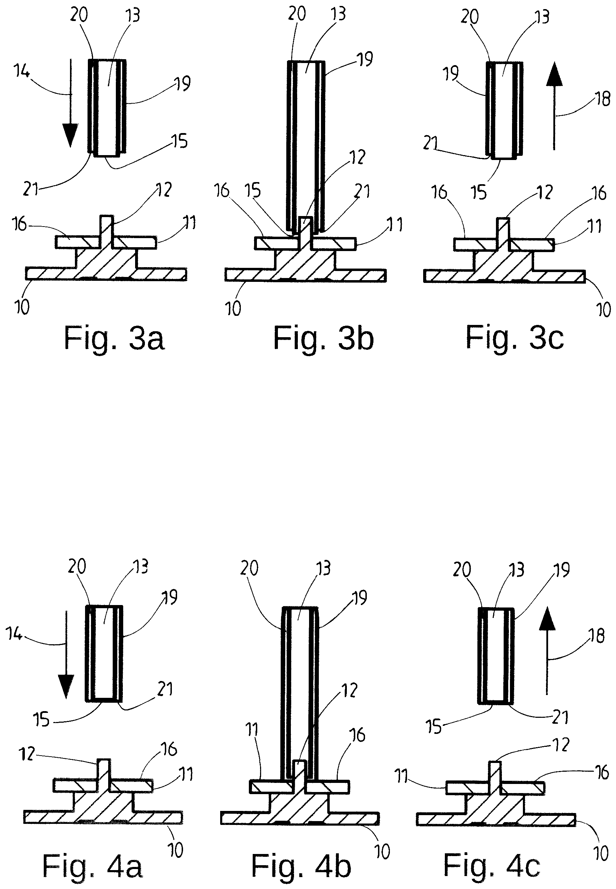

Durch die Figuren Fig. 3a bis 3c wird eine weitere Vorrichtung zum Erhitzen eines Verbindungsmittels 12 beschrieben. Bei diesem Ausführungsbeispiel ist die in den Fig. 1a bis 1c dargestellte Düse 13 durch eine Hülse 19 ergänzt. Gegenstände der Fig. 3a bis 3c, die identisch zu denen der Fig. 1a bis 1c sind, werden mit gleichen Bezugsziffern bezeichnet.

Genau wie zuvor anhand der Fig. 1a bis 1c beschrieben, wird zum Erhitzen des Verbindungselementes 12 die Düse 13 über das Verbindungselement 12 geführt und zwar derart, dass zwischen der Oberfläche 16 des zweiten Teils 11 und der Stirnseite 15 der Düse 13 ein Spalt 17 verbleibt. Es ist jedoch genauso denkbar, dass das Verbindungselement 12 in die Düse 13 hineingeführt wird. Um die Düse 13 ist nun die Hülse 19 angeordnet, und zwar derart, dass sich zwischen einer Außenwandung der Düse 13 und einer Innenwandung der Hülse 19 ein Kanal 20 ausbildet. Dieser Kanal 20 kann sich ringartig axial um die Düse 13 bzw. innerhalb der Hülse 19 erstrecken. Es kann jedoch auch vorgesehen sein, dass dieser Kanal 20 eine beliebige Form aufweist und von einer ringartigen Gestalt abweicht.

Eine Stirnseite 21 der Hülse 19 ist leicht entgegen der Pfeilrichtung 14 nach hinten versetzt. Dadurch sind die Stirnseite 15 der Düse 13 und die Stirnseite 21 der Hülse 19 voneinander versetzt. Somit ist ein Abstand zwischen der Stirnseite 21 der Hülse 19 und der Oberfläche 16 des zweiten Teils 11 größer als ein Abstand zwischen der Stirnseite 15 der Düse 13 und der Oberfläche 16 des zweiten Teils 11 (Fig. 3b).

Wenn nun das Verbindungselement 12 mit Heißluft beaufschlagt wird, kann die aus der Stirnseite 15 der Düse 13 heraustretende immer noch heiße Luft durch den Kanal 20 zwischen der Düse 13 und der Hülse 19 abgesogen werden. Dieses Absaugen kann aktiv durch eine nicht dargestellte Vakuumpumpe erfolgen, welche z. B. an einer der Stirnseite 21 gegenüberliegenden Seite der Hülse 19 mit selbiger verbunden ist. Außerdem ist es denkbar, dass die Heißluft passiv durch den Effekt des Staudruckes durch den Kanal 20 abgeführt wird. Durch dieses aktive oder passive Abführen der Heißluft kann wenigstens ein Großteil der aus der Düse 13 heraustretenden Heißluft zum einen von der Oberfläche 16 weggeleitet werden und zum anderen dem Heißluftgenerator sowie dem Gebläse zum erneuten Erhitzen des Verbindungselementes 12 wieder zugeführt werden.

Sobald das Verbindungselement 12 ausreichend mit Heißluft beaufschlagt wurde, wird die Einheit bestehend aus Hülse 19 und Düse 13 in Pfeilrichtung 18 von dem Verbindungselement 12 wegbewegt (Fig. 3c).

Bei dem in den Fig. 4a bis 4c dargestellten Ausführungsbeispiel der Erfindung besteht ein wesentlicher Unterschied zu dem in den Fig. 3a bis 3c dargestellten Ausführungsbeispiel darin, dass während der Beaufschlagung des Verbindungselementes 12 mit Heißluft die Stirnseite 21 der Hülse 19 in Kontakt mit der Oberfläche 16 des zweiten Teils 11 gebracht ist (Fig. 4b). Ansonsten verhält sich das in den Fig. 4a bis 4c dargestellte Ausführungsbeispiel ähnlich zu dem in den Fig. 3a bis 3c dargestellten Ausführungsbeispiel, weswegen für gleiche Gegenstände gleiche Bezugszeichen verwendet werden.

Dadurch, dass die Hülse 19 mit ihrer Stirnseite 21 auf der Oberfläche 16 des zweiten Teils 11 aufliegt, wird die gesamte Heißluft, die durch die Stirnseite 15 der Düse 13 in den Kanal 20 tritt, abgesaugt (Fig. 3b). Auf diese Weise kann die gesamte Heißluft für die Erhitzung des Verbindungselementes 12 wiederverwendet werden. Des Weiteren kann durch diese Bildung einer geschlossenen Kammer um die Düse 13 das Verbindungselement 12 erhitzt werden, ohne dass die umliegenden Teile, insbesondere das zweite Teil 11 oder empfindlichen Bauteile, einer zu hohen Hitze ausgesetzt werden.

Bei dem in den Fig. 4a bis 4c dargestellten Ausführungsbeispiel kann es vorgesehen sein, dass die Stirnseite 21 der Hülse 19 in Pfeilrichtung 14 versetzt zu der Stirnseite 15 der Düse 13 angeordnet ist. Durch diesen Versatz bildet sich zwischen der Stirnseite 15 der Düse 13 und der Oberfläche 16 ein Spalt 17 aus, während die Stirnseite 21 der Hülse 19 auf der Oberfläche 16 absetzbar ist.

Außerdem kann es vorgesehen sein, dass die Hülse 19 und die Düse 13 axial zueinander verfahrbar sind. Durch die Möglichkeit, die Düse 13 und die Hülse 19 gegeneinander zu verfahren, kann mit der gleichen Einheit sowohl das Ausführungsbeispiel der Fig. 3a bis 3c sowie das Ausführungsbeispiel der Fig. 4a bis 4c realisiert werden. Durch eine eventuelle Federvorspannung zwischen der Hülse 19 und der Düse 13 bewegen sich diese zurück in eine Ausgangslage, sobald eine die relative Bewegung auslösende Kraft abgeschaltet wird. Durch die Federvorspannung oder eine federnde Lagerung der Hülse 19 oder der Düse 13 können eventuelle Unregelmäßigkeiten oder Unebenheiten auf der Oberfläche 16 des zweiten Teils 11 beim Aufsetzen der Stirnseite 21 der Hülse 11 auf die Oberfläche 16 ausgeglichen werden. Durch die federnde Lagerung der Hülse 19 oder durch eine Federvorspannung der Hülse 19 kann somit trotz eventueller Unregelmäßigkeiten oder Unebenheiten eine wenigstens weitestgehend bündige Verbindung zwischen Hülse 19 und Oberfläche 16 erreicht werden. Auch eventuelle Vibrationen der Vorrichtung oder des zweiten Teils 11 können durch die federnde Lagerung der Hülse 19 ausgeglichen werden. Die relative Bewegung kann beispielsweise durch einen nicht dargestellten Antrieb erfolgen, der durch eine ebenfalls nicht dargestellte Steuereinheit derart betrieben wird, dass beim Herabführen der Einheit, bestehend aus der Düse 13 und der Hülse 19, die Hülse 19 über die Düse 13 hinweg geführt wird. Durch diese Steuereinheit kann ebenfalls kontrolliert werden, ob nach der Beaufschlagung des Verbindungselementes 12 mit Heißluft die Hülse 19 bzw. die Düse 13 wieder in eine Ausgangslage zurückbewegt wurde.

### Bezugszeichenliste

- 10: erstes Teil
- 11: zweites Teil
- 12: Verbindungselement
- 13: Düse
- 14: Pfeilrichtung
- 15: Stirnseite
- 16: Oberfläche
- 17: Spalt
- 18: Pfeilrichtung
- 19: Hülse
- 20: Kanal
- 21: Stirnseite
- 22: Schaft
- 23: Stirnseite
- 24: Formstempel
- 26: Stirnfläche

## Patentansprüche

1. Vorrichtung mit einem Formstempel zum Vernieten eines ersten Teils (10) mit einem zweiten Teil (11), insbesondere einem Fügepartner, wobei dem ersten Teil (10) ein erhitztes Verbindungselement (12) zuordbar ist, das der Verbindung des ersten Teils (10) mit dem zweiten Teil (11) dient, und mit einem Schaft (22), in dem der Formstempel (24) beweglich gelagert ist, und wobei ein Innendurchmesser des Schafts (22) einem Durchmesser des durch den Formstempel (24) verformten Verbindungselementes (12) entspricht, **dadurch gekennzeichnet, dass** der Formstempel (24) mit einer Pneumatikeinheit verbunden ist, durch die der Formstempel (24) mit einem steuerbaren und variierbaren, insbesondere kontinuierlichen, Druck beaufschlagbar ist, wobei der Druck vorzugsweise in Abhängigkeit von einer Temperatur des Verbindungselementes (12) variierbar ist und wobei über die Pneumatikeinheit vorzugsweise eine Dauer der Druckbeaufschlagung des Verbindungselementes (12) einstell- bzw. variierbar ist.

2. Vorrichtung nach Anspruch 1, **dadurch gekennzeichnet, dass** der Innendurchmesser des Schafts (22) mit einem Außendurchmesser des Formstempels (24) korrespondiert, vorzugsweise dass der Formstempel (24) formschlüssig in dem Schaft (22) bewegbar ist oder der Formstempel (24) und eine Innenwandung des Schaftes (22) wenigstens geringfügig voneinander beabstandet sind.

3. Vorrichtung nach einem der vorherigen Ansprüche **gekennzeichnet durch** ein Schnellwechselsystem, **durch** welches der Schaft (22) und/oder der Formstempel (24) und sämtliche mechanische, elektrische und/oder pneumatische Verbindungen miteinander koppel- und entkoppelbar sind.

4. Vorrichtung nach einem der vorherigen Ansprüche, **dadurch gekennzeichnet, dass** dem Formstempel (24) ein Temperaturregelsystem zugeordnet ist zur Erwärmung oder Kühlung des Formstempels (24), insbesondere dass ein Träger des Formstempels (24) Kanäle zur Führung eines Kühl- oder Heizmediums, vorzugsweise Luft, aufweist, und der Formstempel (24) und/oder der Schaft (22) über mindestens einen Temperatursensor verfügt, der dem Temperaturregelsystem zugeordnet ist.

5. Vorrichtung nach einem der vorherigen Ansprüche, **dadurch gekennzeichnet, dass** sowohl der Formstempel (24) als auch der Schaft (22) über eine Positionsbestimmungseinrichtung verfügen, mit welcher der Hub des Formstempels (24) und des Schafts (22) über einer Oberfläche (16) des zweiten Teils (11) und über dem Verbindungselement (12) sowie die relative Ausrichtung des Formstempels (24) zum Schaft (22) bestimmbar sind.

6. Vorrichtung nach einem der vorherigen Ansprüche **gekennzeichnet durch** einen Sensor zur Ermittlung einer Kennung des verwendeten Formstempels (24), vorzugsweise eines RFID-Chips oder eine Beschriftung des Formstempels (24), und eine Steuereinheit welche die ermittelte Kennung zur Dokumentation speichert und/oder mit einer hinterlegten Kennung, insbesondere für eine Kalibrierung, abgleicht.

7. Verfahren zum Vernieten eines ersten Teils (10) mit einem zweiten Teil (11), insbesondere einem Fügepartner, wobei ein Verbindungselement (12) zum Verbinden des ersten Teils (10) mit dem zweiten Teil (11) vor dem Vernieten erhitzt wird, und wobei das Verbindungselement (12) zunächst in einer Vorrichtung zum Erhitzen erhitzt wird und anschließend in einer Vorrichtung zum Vernieten durch einen Formstempel (24) verformt wird, **dadurch gekennzeichnet, dass** der Formstempel (24) mit einer Pneumatikeinheit verbunden ist, durch die der Formstempel (24) mit einem steuerbaren und variierbaren, insbesondere kontinuierlichen, Druck beaufschlagt wird, wobei der Druck vorzugsweise in Abhängigkeit von einer Temperatur des Verbindungselementes (12) variiert wird und wobei über die Pneumatikeinheit vorzugsweise eine Dauer der Druckbeaufschlagung des Verbindungselementes (12) eingestellt bzw. variiert wird.

8. Verfahren nach Anspruch 7, **dadurch gekennzeichnet, dass** zum Vernieten ein rohrartiger den Formstempel (24) führender Schaft (22) über das Verbindungselement (12) geführt und mit einer Stirnseite (23) auf einer Oberfläche (16) des zweiten Teils (11) abgesetzt wird.

9. Verfahren nach Anspruch 8, **dadurch gekennzeichnet, dass** der Formstempel (24) in dem Schaft (22) zum Vernieten der Teile (10, 11) auf das Verbindungselement (12) zu bewegt wird, wobei das Verbindungselement (12) durch den Formstempel (24) so lange verformt wird bis ein äußerer Durchmesser des verformten Verbindungselements (12) einem Innendurchmesser des Schaftes (22) entspricht.

10. Verfahren nach einem der Ansprüche 7 bis 9, **dadurch gekennzeichnet, dass** der Formstempel (24) mit einem Druck beaufschlagt wird, der insbesondere in Abhängigkeit von einer ermittelten Temperatur des Verbindungselements (12) variiert wird.

11. Verfahren nach einem der Ansprüche 7 bis 10, **dadurch gekennzeichnet, dass** die Temperatur des Formstempels (24) durch mindestens einen Temperatursensor gemessen wird und durch ein Temperaturregelsystem der Formstempel (24) gekühlt oder erhitzt wird.

12. Verfahren nach einem der Ansprüche 7 bis 11, **dadurch gekennzeichnet, dass** eine Position des Formstempels (24) und des Schafts (22) relativ zum Verbindungselement (12) und eine Position des Formstempels (24) relativ zum Schaft (22) durch eine Positionsbestimmungseinrichtung ermittelt werden und der Formstempel (24) und der Schaft (22) in Abhängigkeit von diesen ermittelten Positionen verfahren werden, insbesondere dass der Formstempel (24) und der Schaft (22) zu einem nächsten Verbindungselement (12) oder gegeneinander verfahren werden.

## Claims

1. Device having a form punch for riveting a first part (10) to a second part (11), in particular a mating partner, wherein the first part (10) is able to be assigned a heated connecting element (12) which serves for connecting the first part (10) to the second part (11), and having a barrel (22) in which the form punch (24) is movably mounted, and wherein an internal diameter of the barrel (22) corresponds to a diameter of the connecting element (12) deformed by the form punch (24), **characterized in that** the form punch (24) is connected to a pneumatic unit by way of which the form punch (24) is able to be impinged with a controllable and variable, in particular continuous, pressure, wherein the pressure is preferably variable as a function of a temperature of the connecting element (12), and wherein a duration of the impingement of the connecting element (12) with pressure is preferably adjustable or variable by way of the pneumatic unit.

2. Device according to Claim 1, **characterized in that** the internal diameter of the barrel (22) corresponds to an external diameter of the form punch (24), preferably **in that** the form punch (24) is movable in a form-fitting manner in the barrel (22), or the form punch (24) and an internal wall of the barrel (22) are at least slightly spaced apart from one another.

3. Device according to one of the preceding claims,
**characterized by** a quick-change system by way of which the barrel (22) and/or the form punch (24) and all of the mechanical, electrical and/or pneumatic connections are able to be coupled to and decoupled from one another.

4. Device according to one of the preceding claims,
**characterized in that** the form punch (24) is assigned a temperature control system for heating or cooling the form punch (24), in particular **in that** a support of the form punch (24) has ducts for guiding a cooling or heating medium, preferably air, and the form punch (24) and/or the barrel (22) have/has at least one temperature sensor which is assigned to the temperature control system.

5. Device according to one of the preceding claims,
**characterized in that** the form punch (24) as well as the barrel (22) have a position sensing installation by way of which the stroke of the form punch (24) and of the barrel (22) above a surface (16) of the second part (11) and above the connecting element (12), as well the relative alignment of the form punch (24) in relation to the barrel (22), are able to be determined.

6. Device according to one of the preceding claims,
**characterized by** a sensor for determining an identification of the form punch (24) used, preferably a RFID chip or a labelling of the form punch (24), and a control unit which stores the detected identification for record-keeping and/or reconciles the detected identification with a stored identification, in particular for calibration.

7. Method for riveting a first part (10) to a second part (11), in particular a mating partner, wherein a connecting element (12) for connecting the first part (10) to the second part (11) is heated prior to riveting, and wherein the connecting element (12) is initially heated in a device for heating and is subsequently deformed by a form punch (24) in a device for riveting, **characterized in that** the form punch (24) is connected to a pneumatic unit by way of which the form punch (24) is impinged with a controllable and variable, in particular continuous, pressure, wherein the pressure is preferably varied as a function of a temperature of the connecting element (12), and wherein a duration of the impingement of the connecting element (12) with pressure is preferably adjusted or varied by way of the pneumatic unit.

8. Method according to Claim 7, **characterized in that** for riveting a tubular barrel (22), which guides the form punch (24), is guided over the connecting element (12) and by way of an end side (23) is lowered onto a surface (16) of the second part (11).

9. Method according to Claim 8, **characterized in that** the form punch (24) in the barrel (22) for riveting the parts (10, 11) is moved towards the connecting element (12), wherein the connecting element (12) is deformed by the form punch (24) until an external diameter of the deformed connecting element (12) corresponds to an internal diameter of the barrel (22) .

10. Method according to one of Claims 7 to 9, **characterized in that** the form punch (24) is impinged with a pressure which is varied in particular as a function of a detected temperature of the connecting element (12).

11. Method according to one of Claims 7 to 10,
**characterized in that** the temperature of the form punch (24) is measured by at least one temperature sensor, and the form punch (24) is cooled or heated by a temperature control system.

12. Method according to one of Claims 7 to 11,
**characterized in that** a position of the form punch (24) and of the barrel (22) relative to the connecting element (12), and a position of the form punch (24) relative to the barrel (22), are detected by a position sensing installation, and the form punch (24) and the barrel (22) are displaced as a function of these detected positions, in particular in that the form punch (24) and the barrel (22) are moved to a next connecting element (12) or relative to one another.

## Revendications

1. Arrangement comprenant un poinçon de formage destiné à riveter une première pièce (10) avec une deuxième pièce (11), notamment un homologue de jonction, un élément de liaison (12) chauffé pouvant être associé à la première pièce (10), lequel sert à la liaison de la première pièce (10) avec la deuxième pièce (11), et comprenant une queue (22) dans laquelle le poinçon de formage (24) est monté mobile, et un diamètre intérieur de la queue (22) correspondant à un diamètre de l'élément de liaison (12) façonné par le poinçon de formage (24), **caractérisé en ce que** le poinçon de formage (24) est relié à une unité pneumatique, par le biais de laquelle le poinçon de formage (24) peut être sollicité avec une pression commandable et variable, notamment continue, la pression étant de préférence mise à varier en fonction d'une température de l'élément de liaison (12) et une durée de la sollicitation en pression de l'élément de liaison (12) pouvant de préférence être réglée ou mise à varier par le biais de l'unité pneumatique.

2. Arrangement selon la revendication 1, **caractérisé en ce que** le diamètre intérieur de la queue (22) correspond à un diamètre extérieur du poinçon de formage (24), de préférence **en ce que** le poinçon de formage (24) peut être déplacé par complémentarités de formes dans la queue (22) ou le poinçon de formage (24) et une paroi intérieure de la queue (22) sont espacés au moins faiblement l'un de l'autre.

3. Arrangement selon l'une des revendications précédentes, **caractérisé par** un système de changement rapide, par lequel la queue (22) et/ou le poinçon de formage (24) ainsi que toutes les liaisons mécaniques, électriques et/ou pneumatiques peuvent être accouplées entre elles et désaccouplées les unes des autres.

4. Arrangement selon l'une des revendications précédentes, **caractérisé en ce qu'**un système de régulation de la température est associé au poinçon de formage (24) en vue de réchauffer ou de refroidir le poinçon de formage (24), notamment **en ce qu'**un élément porteur du poinçon de formage (24) possède des canaux destinés à guider un fluide de refroidissement ou de chauffage, de préférence de l'air, et le poinçon de formage (24) et/ou la queue (22) dispose d'au moins un capteur de température qui est associé au système de régulation de la température.

5. Arrangement selon l'une des revendications précédentes, **caractérisé en ce que** le poinçon de formage (24) ainsi que la queue (22) disposent d'un dispositif de détermination de position, avec lequel peuvent être déterminées la course du poinçon de formage (24) et de la queue (22) au-dessus d'une surface (16) de la deuxième pièce (11) et au-dessus de l'élément de liaison (12) ainsi qu'une orientation relative du poinçon de formage (24) par rapport à la queue (22).

6. Arrangement selon l'une des revendications précédentes, **caractérisé par** un capteur destiné à déterminer un identifiant du poinçon de formage (24) utilisé, de préférence d'une puce RFID ou un marquage du poinçon de formage (24), et une unité de commande qui mémorise l'identifiant déterminé pour documentation et/ou le compare à un identifiant enregistré, notamment pour un étalonnage.

7. Procédé de rivetage d'une première pièce (10) avec une deuxième pièce (11), notamment un homologue de jonction, un élément de liaison (12) destiné à relier la première pièce (10) avec la deuxième pièce (11) étant chauffé avant le rivetage, et l'élément de liaison (12) étant tout d'abord chauffé dans un arrangement servant au chauffage et étant ensuite façonné dans un arrangement servant au rivetage par poinçon de formage (24), **caractérisé en ce que** le poinçon de formage (24) est relié à une unité pneumatique, par le biais de laquelle le poinçon de formage (24) peut être sollicité avec une pression commandable et variable, notamment continue, la pression étant de préférence mise à varier en fonction d'une température de l'élément de liaison (12) et une durée de la sollicitation en pression de l'élément de liaison (12) étant de préférence réglée ou mise à varier par le biais de l'unité pneumatique.

8. Procédé selon la revendication 7, **caractérisé en ce qu'**une queue (22) tubulaire guidant le poinçon de formage (24) est guidée au-dessus de l'élément de liaison (12) en vue du rivetage et abaissée avec un côté frontal (23) sur une surface (16) de la deuxième pièce (11).

9. Procédé selon la revendication 8, **caractérisé en ce que** le poinçon de formage (24) est déplacé dans la queue (22) vers l'élément de liaison (12) en vue du rivetage des pièces (10, 11), l'élément de liaison (12) étant façonné par le poinçon de formage (24) jusqu'à ce qu'un diamètre extérieur de l'élément de liaison (12) façonné correspond à un diamètre intérieur de la queue (22).

10. Procédé selon l'une des revendications 7 à 9, **caractérisé en ce que** le poinçon de formage (24) est sollicité avec une pression qui est notamment mise à varier en fonction d'une température déterminée de l'élément de liaison (12).

11. Procédé selon l'une des revendications 7 à 10, **caractérisé en ce que** la température du poinçon de formage (24) est mesurée par au moins un capteur de température et refroidie ou réchauffée par un système de régulation de la température du poinçon de formage (24).

12. Procédé selon l'une des revendications 7 à 11, **caractérisé en ce qu'**une position du poinçon de formage (24) et de la queue (22) par rapport à l'élément de liaison (12) et une position du poinçon de formage (24) par rapport à la queue (22) sont déterminées par un dispositif de détermination de position et le poinçon de formage (24) et la queue (22) sont déplacés en fonction de ces positions déterminées, notamment **en ce que** le poinçon de formage (24) et la queue (22) sont déplacés vers un élément de liaison (12) suivant ou l'un contre l'autre.
